# EUROPEAN PATENT APPLICATION

(11) **EP 3 355 398 A1**
(43) Date of publication of application: **01.08.2018**
(21) Application number: 17774228.5
(22) Date of filing: 13.03.2017
(51) Int. Cl.: H01M 6/16, H01M 4/50

(54) **NONAQUEOUS ELECTROLYTE PRIMARY BATTERY AND METHOD FOR MANUFACTURING SAME**

(30) Priority: 30.03.2016 JP 2016069181; 15.12.2016 JP 2016243621; 16.12.2016 JP 2016244253; 16.12.2016 JP 2016244255; 26.12.2016 JP 2016250880
(71) Applicant: Maxell Holdings, Ltd., Kyoto 618-8525 (JP)
(72) Inventor: SUGIOKA Yu, Kyoto 618-8525 (JP); MORIKAMI Hidetoshi, Kyoto 618-8525 (JP); OTSUKA Takumi, Kyoto 618-8525 (JP)
(74) Representative: Diehl & Partner GbR
(86) International application number: PCT/JP2017/009918
(87) International publication number: WO 2017/169684

(57) **Abstract**

A non-aqueous electrolyte primary battery of the present invention includes: a negative electrode; a positive electrode; a separator; and a non-aqueous electrolyte. The negative electrode contains metallic lithium or a lithium alloy. The positive electrode contains a manganese oxide or a lithium-containing manganese oxide with a lithium content of 3.5% by mass or less. The non-aqueous electrolyte contains a phosphoric acid compound or a boric acid compound having in its molecule a group represented by General Formula (1) below, and the content of the phosphoric acid compound or the boric acid compound in the non-aqueous electrolyte is 8% by mass or less: 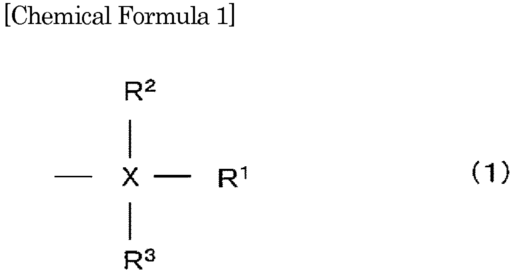 where X is Si, Ge or Sn; R¹, R² and R³ independently represent an alkyl group having 1 to 10 carbon atoms, an alkenyl group having 2 to 10 carbon atoms, or an aryl group having 6 to 10 carbon atoms; and some or all of hydrogen atoms may be substituted with a fluorine atom.

## Description

### Technical Field

The present invention relates to a non-aqueous electrolyte primary battery excellent in high-temperature storage characteristics, and a method for manufacturing the same.

### Background Art

Non-aqueous electrolyte batteries are used in various applications, taking advantage of their characteristics such as high-capacity characteristics and high-voltage characteristics. Improvements in various characteristics thereof have been in demand as a result of an increase in the number of fields to which the non-aqueous electrolyte batteries are applied.

In particular, the practical application of electric cars and the like has resulted in an increase in demand for vehicle-mounted non-aqueous electrolyte batteries (secondary batteries) in recent years. While vehicle-mounted non-aqueous electrolyte batteries are mainly applied to driving power sources for motors in electric cars, they are being increasingly applied to other devices. For example, emergency call systems for making a report about an accident or the like of a vehicle to various related parties are currently under development, and the application of the non-aqueous electrolyte batteries (primary batteries or secondary batteries) to power sources for these systems is being looked into.

In practice, such systems operate in limited cases, but should reliably operate in the event of an emergency. Therefore, the batteries used as power sources are required to have a reliability according to which their characteristics can be favorably maintained despite being stored for a long period of time.

Considering that there have been some cases where a blowout of a tire of a traveling vehicle leads to a serious accident, vehicles equipped with tire pressure monitoring systems to ensure safety during the travel of the vehicles have become widespread. Non-aqueous electrolyte batteries (primary batteries) are used as power sources for the above-mentioned systems. These systems are installed on the inside of tires that may become hot and humid, and therefore, the batteries used as the power sources are also required to have reliability according to which their characteristics can be maintained for a long period of time.

There also are applications that require non-aqueous electrolyte batteries to have a still higher temperature resistance, such as medical applications in which heat sterilization and the like are necessary and space applications in which a high temperature environment of 150°C or higher is estimated. Techniques for improving the heat resistance of non-aqueous electrolyte batteries are currently under development to allow the batteries to be durable for a long period of time in a high temperature environment.

Improvement of a non-aqueous electrolyte is being looked into as one of the techniques for improving such characteristics. It is proposed that a phosphoric acid ester compound or the like having a specific structure is added to the non-aqueous electrolyte in order to improve the safety of the batteries or in order to improve the durability and voltage resistance of the batteries (Patent Documents 1 and 2).

### Prior Art Documents

### Patent Documents

Patent Document 1: JP 2001-319685A
Patent Document 2: JP 2015-072864A

### Disclosure of Invention

### Problem to be Solved by the Invention

In order to configure a battery capable of maintaining its functions for a long period of time in a high temperature environment of 150°C or higher, it is necessary to appropriately design the configuration of a positive electrode or negative electrode as well as that of a non-aqueous electrolyte.

The present invention was achieved in light of the aforementioned circumstances, and it is an object thereof to provide a non-aqueous electrolyte primary battery having little characteristic deterioration even when the battery is placed in a high temperature environment for a long period of time, and a method for manufacturing the same.

### Means for Solving Problem

A non-aqueous electrolyte primary battery of the present invention is a non-aqueous electrolyte primary battery, including: a negative electrode; a positive electrode; a separator; and a non-aqueous electrolyte. The negative electrode contains metallic lithium or a lithium alloy. The positive electrode contains a manganese oxide or a lithium-containing manganese oxide with a lithium content of 3.5% by mass or less. The non-aqueous electrolyte contains a phosphoric acid compound or a boric acid compound having in its molecule a group represented by General Formula (1) below, and the content of the phosphoric acid compound or the boric acid compound in the non-aqueous electrolyte is 8% by mass or less: 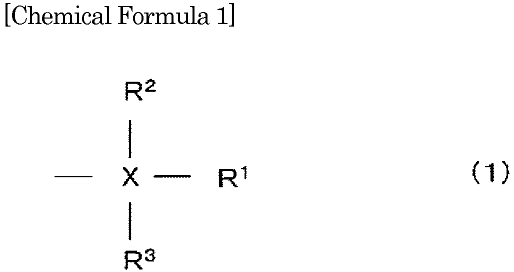 where X is Si, Ge or Sn; R¹, R² and R³ independently represent an alkyl group having 1 to 10 carbon atoms, an alkenyl group having 2 to 10 carbon atoms, or an aryl group having 6 to 10 carbon atoms; and some or all of hydrogen atoms may be substituted with a fluorine atom.

A manufacturing method of a non-aqueous electrolyte primary battery of the present invention is a method for manufacturing the non-aqueous electrolyte primary battery of the present invention, including: adding a phosphoric acid compound or a boric acid compound having in its molecule a group represented by General Formula (1) above to an organic solvent to produce a non-aqueous electrolyte.

### Effects of the Invention

According to the present invention, it is possible to provide a highly reliable non-aqueous electrolyte primary battery that prevents swelling and an increase in the internal resistance of the battery during high temperature storage, and a method for manufacturing the same.

### Brief Description of Drawings

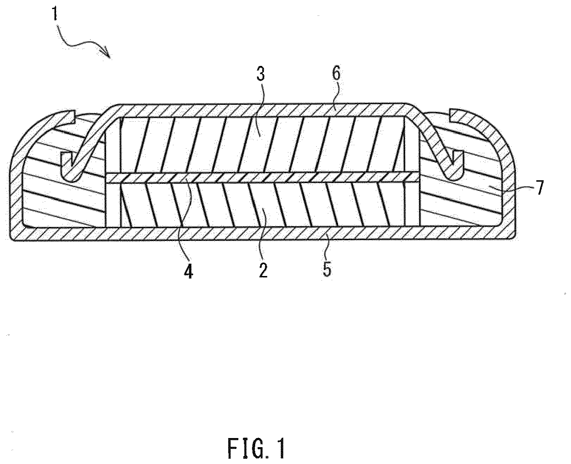

[FIG. 1] FIG. 1 is a cross-sectional view schematically illustrating a non-aqueous electrolyte primary battery.

### Description of the Invention

Hereinafter, the embodiments of a non-aqueous electrolyte primary battery of the present invention will be described.

A non-aqueous electrolyte primary battery of this embodiment includes: a negative electrode; a positive electrode; a separator; and a non-aqueous electrolyte. The negative electrode contains metallic lithium or a lithium alloy. The positive electrode contains a manganese oxide or a lithium-containing manganese oxide with a lithium content of 3.5% by mass or less. The non-aqueous electrolyte contains a phosphoric acid compound or a boric acid compound having in its molecule a group represented by General Formula (1) below, and the content of the phosphoric acid compound or the boric acid compound in the non-aqueous electrolyte is 8% by mass or less.

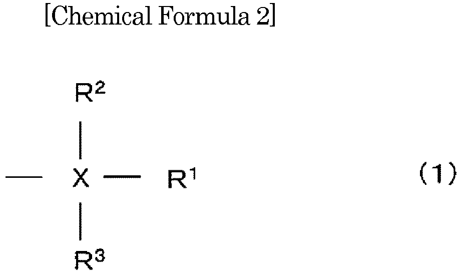

In General Formula (1) above, X is Si, Ge or Sn, R¹, R² and R³ independently represent an alkyl group having 1 to 10 carbon atoms, an alkenyl group having 2 to 10 carbon atoms, or an aryl group having 6 to 10 carbon atoms, and some or all of hydrogen atoms may be substituted with a fluorine atom.

It is known that when added to a non-aqueous electrolyte of a non-aqueous electrolyte secondary battery in which a carbon material is used as a negative electrode active material, the phosphoric acid compound having in its molecule a group represented by General Formula (1) above improves the safety.

Meanwhile, investigation conducted by the present inventors revealed that when the non-aqueous electrolyte to which the phosphoric acid compound or boric acid compound having in its molecule a group represented by General Formula (1) above has been added is used in a non-aqueous electrolyte primary battery in which a negative electrode containing lithium or a lithium alloy is used, it is possible to reduce the deterioration of battery characteristics after storage at a high temperature of 150°C or higher, and to maintain excellent load characteristics.

When the phosphoric acid compound or boric acid compound is added to a non-aqueous electrolyte, the phosphoric acid compound or boric acid compound is considered to form a thin and high-quality coating on the surface of the lithium or lithium alloy of the negative electrode. Hence, it is possible to reduce the deterioration of the negative electrode during high temperature storage, and to reduce the deterioration of load characteristics due to the formation of the coating because the coating is thin, thereby making it possible to configure a non-aqueous electrolyte primary battery that exhibits excellent load characteristics even after high temperature storage.

Hereinafter, the constituents of the non-aqueous electrolyte primary battery of this embodiment will be described.

### <Non-aqueous electrolyte>

The non-aqueous electrolyte contains an organic solvent and a phosphoric acid compound or boric acid compound having in its molecule a group represented by General Formula (1) below.

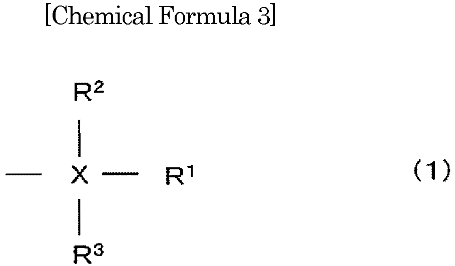

The above-mentioned phosphoric acid compound has a structure in which at least one of hydrogen atoms in phosphoric acid is substituted with the group represented by General Formula (1) above. The above-mentioned boric acid compound has a structure in which at least one of hydrogen atoms in boric acid is substituted with the group represented by General Formula (1) above.

In General Formula (1) above, X is Si, Ge or Sn. It is preferable that the above-mentioned phosphoric acid compound is silyl phosphate where X is Si, and the above-mentioned boric acid compound is silyl borate where X is Si.

In General Formula (1) above, R¹, R² and R³ are independently an alkyl group having 1 to 10 carbon atoms, an alkenyl group having 2 to 10 carbon atoms, or an aryl group having 6 to 10 carbon atoms, and, in particular, a methyl group or an ethyl group is preferable. Some or all of hydrogen atoms in R¹, R² and R³ may be substituted with a fluorine atom. It is particularly preferable that the group represented by General Formula (1) above is a trimethylsilyl group.

### [Phosphoric acid compound and boric acid compound]

The above-mentioned phosphoric acid compound may be phosphoric acid in which only one hydrogen atom is substituted with the group represented by General Formula (1) above, two hydrogen atoms are substituted with the group represented by General Formula (1) above, or all of the three hydrogen atoms are substituted with the group represented by General Formula (1) above. It is preferable that all of the three hydrogen atoms of phosphoric acid are substituted with the group represented by General Formula (1) above.

Examples of the phosphoric acid compound include mono(trimethylsilyl) phosphate, di(trimethylsilyl)phosphate, tris(trimethylsilyl)phosphate, dimethyltrimethylsilyl phosphate, methyl bis(trimethylsilyl)phosphate, diethyltrimethylsilyl phosphate, diphenyl(trimethylsilyl)phosphate, tris(triethylsilyl) phosphate, tris(vinyldimethylsilyl)phosphate, tris(triisopropylsilyl)phosphate, tris(dimethylethylsilyl)phosphate, tris(methyldiethylsilyl)phosphate, tris(butyldimethylsilyl)phosphate, tris(vinyldimethylsilyl)phosphate, and tris(triphenylsilyl)phosphate. Mono(trimethylsilyl)phosphate, di(trimethylsilyl) phosphate, tris(trimethylsilyl)phosphate, dimethyltrimethylsilyl phosphate, and methyl bis(trimethylsilyl)phosphate are preferable, and tris(trimethylsilyl)phosphate is particularly preferable.

The above-mentioned boric acid compound may be boric acid in which only one hydrogen atom is substituted with the group represented by General Formula (1) above, two hydrogen atoms are substituted with the group represented by General Formula (1) above, or all of the three hydrogen atoms are substituted with the group represented by General Formula (1) above. It is preferable that all of the three hydrogen atoms of boric acid are substituted with the group represented by General Formula (1) above.

Examples of the boric acid compound include mono(trimethylsilyl)borate, di(trimethylsilyl)borate, tris(trimethylsilyl)borate, dimethyltrimethylsilyl borate, methyl bis(trimethylsilyl)borate, diethyltrimethylsilyl borate, diphenyl(trimethylsilyl) borate, tris(triethylsilyl)borate, tris(vinyldimethylsilyl)borate, tris(triisopropylsilyl) borate, tris(dimethylethylsilyl)borate, tris(methyldiethylsilyl)borate, tris(butyldimethylsilyl)borate, tris(vinyldimethylsilyl)borate, and tris(triphenylsilyl) borate. Mono(trimethylsilyl)borate, di(trimethylsilyl)borate, tris(trimethylsilyl) borate, dimethyltrimethylsilyl borate and methyl bis(trimethylsilyl)borate are preferable, and tris(trimethylsilyl)borate is particularly preferable.

The content of the phosphoric acid compound or boric acid compound having in its molecule the group represented by General Formula (1) above in the non-aqueous electrolyte is preferably 0.1 mass% or more, more preferably 0.3 mass% or more, particularly preferably 0.5 mass% or more, and most preferably 0.7 mass% or more, from the viewpoint of more favorably ensuring the above-mentioned effects of using the phosphoric acid compound or boric acid compound. Moreover, if the content is excessively large, a coating that can be formed on the surface of the negative electrode will be thick, which may increase resistance and degrade load characteristics. Therefore, the content of the phosphoric acid compound or boric acid compound having in its molecule the group represented by General Formula (1) above in the non-aqueous electrolyte needs to be 8 mass% or less, and is preferably 7 mass% or less, more preferably 5 mass% or less, and most preferably 3 mass% or less.

If a lithium salt such as LiClO₄, LiCF₃SO₃, Li₂C₂F₄(SO₃)₂, LiN(FSO₂)₂, or LiN(CF₃SO)₂ is used as an electrolyte, the favorable range of the content of the compound having in its molecule the group represented by General Formula (1) changes, as compared with the case of using a fluorine-containing inorganic lithium salt such as LiPF₆, LiBF₄, LiAsF₆, or LiSbF₆. If an electrolyte other than the fluorine-containing inorganic lithium salt is used, the content of the compound in the non-aqueous electrolyte is preferably 0.5 mass% or more, more preferably 1 mass% or more, particularly preferably 2 mass% or more, and most preferably 4 mass% or more, while the content is preferably 7 mass% or less, more preferably 6 mass% or less, and most preferably 5.5 mass% or less. The reason for this is considered to be that the thickness of the coating to be formed, etc., changes depending on the type of the electrolyte.

When the non-aqueous electrolyte contains both of the phosphoric acid compound and the boric acid compound, it is sufficient that the total amount of these compounds is adjusted to be within the above-mentioned range.

### [Organic solvent]

Examples of the organic solvent include: cyclic carbonates such as ethylene carbonate, propylene carbonate, butylene carbonate, and vinylene carbonate; chain carbonates such as dimethyl carbonate, diethyl carbonate, methylethyl carbonate; ethers such as 1,2-dimethoxyethane, diglyme (diethylene glycol dimethyl ether), triglyme (triethylene glycol dimethyl ether), tetraglyme (tetraethylene glycol dimethyl ether), methoxyethoxy ethane, 1,2-diethoxyethane, and tetrahydrofuran; cyclic esters such as γ-butyrolactone; and nitriles. These may be used individually or in combination of two or more. Particularly, it is preferable to use the above-mentioned carbonate and ether together.

When the carbonate and ether are used together as the organic solvent, it is preferable that a quantity ratio (mixing ratio) of carbonate to ether in the total of solvent is carbonate : ether = 30 : 70 to 70 : 30, in a volume ratio.

In order to produce the effects of the phosphoric acid compound and the boric acid compound more smoothly, the content of propylene carbonate is preferably 10 vol% or more, and more preferably 20 vol% or more, in the total of solvent.

Further, it is preferable to use nitrile as the organic solvent. Since nitrile has low viscosity and high permitivity, load characteristics of a non-aqueous electrolyte primary battery can be improved further by using nitrile as the organic solvent.

As a specific example of the nitrile, mononitrile is used preferably, and examples of the mononitrile include: chain nitriles such as acetonitrile, propionitrile, butyronitrile, valeronitrile, and acrylonitrile; and cyclic nitriles such as benzonitrile. Nitriles having a substituent such as methoxyacetonitrile also can be used.

When nitrile is used as the organic solvent, the content of nitrile in the total amount of organic solvents is preferably 5 vol% or more, and more preferably 8 vol% or more, from the viewpoint of favorably producing the above-mentioned effect with use of nitrile. However, since nitrile is highly reactive with lithium of the negative electrode, it is preferable that the usage amount of nitrile is reduced to some extent to prevent excessive reaction with lithium. Therefore, the content of nitrile in the total amount of organic solvents is preferably 20 vol% or less, and more preferably 17 vol% or less.

### [Electrolyte]

The non-aqueous electrolyte contains an electrolyte. Examples of the electrolyte include LiClO₄, LiPF₆, LiBF₄, LiAsF₆, LiSbF₆, LiCF₃SO₃, LiCF₃CO₂, Li₂C₂F₄(SO₃)₂, LiN(FSO₂)₂, LiN(CF₃SO₂)₂, LiC(CF₃SO₂)₃, LiCₙF₂ₙ₊₁SO₃ (n≥2) and LiN(RfOSO₂)₂ (where Rf is a fluoroalkyl group), and at least one selected from these is used. Among these, it is preferable to use at least one selected from LiClO₄, LiBF₄, LiCF₃SO₃, Li₂C₂F₄(SO₃)₂, LiN(FSO₂)₂, LiN(CF₃SO₂)₂, LiC(CF₃SO₂)₃, and LiCF₃CO₂.

The concentration of these lithium salts in the non-aqueous electrolyte is preferably 0.3 mol/L or more, more preferably 0.5 mol/L or more, and particularly preferably 0.8 mol/L or more, while the concentration thereof is preferably 1.8 mol/L or less, more preferably 1.5 mol/L or less, and particularly preferably 1.2 mol/L or less.

Two or more lithium salts can be used together, and in this case, it is sufficient that the total concentration of these lithium salts is adjusted to be within the above-mentioned range.

Incidentally, when LiClO₄ is used as the lithium salt, the concentration is preferably 0.3 mol/L or more, and more preferably 0.4 mol/L or more, while the concentration is preferably 1 mol/L or less, and more preferably 0.8 mol/L or less. When LiClO₄ and a lithium salt other than LiClO₄ are used together, it is preferable to adjust the total concentration of these lithium salts to be 1 mol/L or less.

### [Additive]

It is preferable that the non-aqueous electrolyte contains a compound having a lactone ring because the discharge characteristics of a battery can be improved at low temperature. Examples of the compound having a lactone ring include γ-butyrolactone and lactones having a substituent at the α position.

The lactones having a substituent at the α position are preferably five-membered rings (the rings include four carbon atoms), for example. The above-mentioned lactones may have one or two substituents at the α position.

Examples of the above-mentioned substituent include hydrocarbon groups and halogen groups (i.e., fluoro group, chloro group, bromo group, and iodo group). The hydrocarbon group is preferably an alkyl group, an aryl group, or the like, and the number of carbon atoms thereof is preferably 1 or more and 15 or less (more preferably 6 or less). Some or all of hydrogen atoms of the hydrocarbon group may be substituted with a fluorine atom. The hydrocarbon group as the above-mentioned substituent is further preferably a methyl group, an ethyl group, a propyl group, a butyl group, a phenyl group, or the like.

Specific examples of the lactones having a substituent at the α position include α-methyl-γ-butyrolactone, α-ethyl-γ-butyrolactone, α-propyl-γ-butyrolactone, α-butyl-γ-butyrolactone, α-phenyl-γ-butyrolactone, α-fluoro-γ-butyrolactone, α-chloro-γ-butyrolactone, α-bromo-γ-butyrolactone, α-iodo-γ-butyrolactone, α,α-dimethyl-γ-butyrolactone, α,α-diethyl-γ-butyrolactone, α,α-diphenyl-γ-butyrolactone, α-ethyl-α-8methyl-γ-butyrolactone, α-methyl-α-phenyl-γ-butyrolactone, α,α-difluoro-γ-butyrolactone, α,α-dichloro-γ-butyrolactone, α,α-dibromo-γ-butyrolactone, and α,α-diiodo-γ-butyrolactone. These lactones may be used alone or in combination of two or more. Among these, α-methyl-γ-butyrolactone is more preferable.

When the compound having a lactone ring is used, the content of the compound having a lactone ring in the total of organic solvents of the non-aqueous electrolyte is preferably 0.1 mass% or more, more preferably 0.5 mass% or more, and particularly preferably 1 mass% or more, from the viewpoint of favorably ensuring the effects of using the compound having a lactone ring.

The compound having a lactone ring can be used also as the organic solvent. Although not limited particularly, the content of the compound having a lactone ring in the total of organic solvents of the non-aqueous electrolyte is preferably 30 mass% or less, more preferably 10 mass% or less, and particularly preferably 5 mass% or less, in order not to inhibit the functions of the phosphoric acid compound or boric acid compound having in its molecule the group represented by General Formula (1) above.

The following additives can also be added to the non-aqueous electrolyte as appropriate for the purpose of further improving various characteristics of a battery: vinylene carbonates; sultone compounds such as 1,3-propanesultone, 1,4-butanesultone, and 1,3-propenesultone; disulfide compounds such as diphenyl disulfide, benzene compounds such as cyclohexylbenzene, biphenyl, fluorobenzene, and t-butylbenzene; fluorine-substituted cyclic carbonates such as 4-fluoro-1,3-dioxolan-2-one (FEC); organic lithium borates such as lithium tetrakis(acetate) borate and lithium bis(oxalate) borate (LiBOB); acid anhydrides such as maleic anhydride and phthalic anhydride; and dinitriles such as malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile.

In particular, when a sultone compound or organic lithium borate is used together with the phosphoric acid compound or boric acid compound having in its molecule the group represented by General Formula (1) above, a more favorable surface coating is formed on the positive electrode or negative electrode, thereby further improving the high-temperature storage characteristics and the like of a battery.

The sultone compound preferably has a five, six, or seven-membered ring structure, and more preferably has a five-membered ring structure, from the viewpoint of the solubility into an electrolyte.

For example, in a case of using a manganese oxide or a lithium-containing manganese oxide with a lithium content of 3.5 mass% or less as a positive electrode active material, if a battery in a state where discharging has been progressed (the depth of discharge is about 40% or more) is left for a long period of time in a high temperature environment, gas is generated easily despite a non-aqueous electrolyte containing the phosphoric acid compound or boric acid compound. This tends to cause problems such as swelling of a battery.

Meanwhile, when the non-aqueous electrolyte contains a sultone compound or organic lithium borate together with the phosphoric acid compound or boric acid compound, it is possible to effectively reduce the generation of gas attributed to the positive electrode active material in a state where discharging has been progressed, while preventing an increase in the internal resistance of the battery. Thus, the reliability of the battery in a high temperature environment can be improved further.

The content of the additive in the non-aqueous electrolyte is preferably 0.1 mass% or more, more preferably 0.5 mass% or more, and particularly preferably 1 mass% or more. In order to prevent the deterioration of the load characteristics, the content of the additive in the non-aqueous electrolyte is preferably 5 mass% or less, more preferably 3 mass% or less, and particularly preferably 2 mass% or less.

Moreover, in order to obtain the effects of the additive and maintain the load characteristics, the total content of the additive and the phosphoric acid compound or boric acid compound having in its molecule the group represented by General Formula (1) above in the non-aqueous electrolyte is preferably in a range from 0.2 to 5 mass%.

### [Others]

The non-aqueous electrolyte may also be made into a gel (gel-like electrolyte) by using a known gelling agent.

The non-aqueous electrolyte can be produced by adding the phosphoric acid compound or boric acid compound having in its molecule the group represented by General Formula (1) above and the other components to the organic solvent, and mixing them.

### <Negative electrode>

The negative electrode according to the non-aqueous electrolyte primary battery of this embodiment contains metallic lithium or a lithium alloy. Examples of the negative electrode containing metallic lithium include a metallic lithium foil, which can be used as it is, a laminate having a structure in which a metallic lithium foil is pressure-bonded to one side or both sides of a current collector, and the like.

Examples of the negative electrode containing a lithium alloy include a lithium alloy foil, which can be used as it is, a laminate having a structure in which a lithium alloy foil is pressure-bonded to one side or both sides of a current collector, and the like.

Furthermore, as the negative electrode containing a lithium alloy, it is also possible to use a negative electrode that is obtained by preparing a laminate in which a layer containing an alloying element for forming a lithium alloy is layered, through pressure bonding or the like, on the surface of a lithium layer (layer containing lithium) made of a metallic lithium foil or the like, and bringing this laminate into contact with the non-aqueous electrolyte in a battery to form a lithium alloy on the surface of the lithium layer. In the case of such a negative electrode, a laminate in which the layer containing an alloying element is formed on only one side of the lithium layer may be used, or a laminate in which the layers containing an alloying element are formed on both sides of the lithium layer may be used. The laminate can be formed by pressure-bonding a metallic lithium foil and a foil made of an alloying element to each other, for example.

A current collector can be used also in the case where the negative electrode is formed by forming a lithium alloy in a battery. For example, a laminate in which a lithium layer is formed on one side of a negative electrode current collector and a layer containing an alloying element is formed on a side of the lithium layer that is opposite to the negative electrode current collector may be used, or a laminate in which lithium layers are formed on both sides of a negative electrode current collector and a layer containing an alloying element is formed on a side of each lithium layer that is opposite to the negative electrode current collector may be used, for example. It is sufficient that a lithium layer (metallic lithium foil) is layered on a negative electrode current collector through pressure bonding.

Examples of the alloying element for forming a lithium alloy include aluminum, lead, bismuth, indium, and gallium. Among these, aluminum is preferred.

The layer containing the alloying element according to the laminate for forming a negative electrode may be, e.g., a foil made of these alloying elements. The thickness of the layer containing the alloying element is preferably 1 µm or more, and more preferably 3 µm or more, while the thickness is preferably 20 µm or less, and more preferably 12 µm or less.

The lithium layer according to the laminate for forming a negative electrode may be, e.g., a metallic lithium foil. The thickness of the lithium layer is preferably 0.1 to 1.5 mm. The thickness of the lithium layer for forming the negative electrode containing metallic lithium (metallic lithium foil for forming the negative electrode) is preferably 0.1 to 1.5 mm.

Examples of the negative electrode current collector include copper, nickel, iron, and stainless steel, and examples of its form include a plainly woven metal net, an expanded metal, a lath net, a punched metal, a metal foam, and a foil (plate). The thickness of the current collector is preferably 5 to 100 µm, for example. It is desirable to apply a pasty conductive material such as carbon paste or silver paste to the surface of such a current collector.

A lead body for electrical connection to another member in a battery can be attached to the negative electrode using an ordinary method.

### <Positive electrode>

The positive electrode preferably contains, as an active material, a manganese oxide such as a manganese dioxide or a lithium-containing manganese oxide with a lithium content of 3.5 mass% or less, which can achieve a high operation voltage of about 3 V or more and which can constitute a high capacity battery in combination with the above-mentioned negative electrode.

Examples of the lithium-containing manganese oxide include composite oxides having the same crystal structure as that of manganese dioxide, and LiMn₃O₆. Among these, the composite oxides having the same crystal structure as that of manganese dioxide are preferably used, and those having a structure of a β type, γ type, or combination of β and γ types are more preferably used.

By using the manganese oxide or the lithium-containing manganese oxide as the positive electrode, an open circuit voltage (OCV) of a battery can be set in a range of 3.7 V or less. Thus, a reaction between the positive electrode and the electrolyte (e.g., the decomposition of the electrolyte by the positive electrode active material) can be prevented, and the effects of the phosphoric acid compound or boric acid compound having in its molecule the group represented by General Formula (1) above can be enhanced further.

In the case of using the lithium-containing manganese oxide, the content of lithium in the oxide is preferably 3 mass% or less, more preferably 2 mass% or less, and particularly preferably 1.5 mass% or less, and most preferably 1 mass% or less, so as to further increase the discharge capacity of a battery.

By adding lithium to a manganese oxide beforehand, the moisture content in the oxide can be reduced. To adjust the moisture content within a preferable range, the content of lithium in the lithium-containing manganese oxide is preferably 0.1 mass% or more, more preferably 0.2 mass% or more, particularly preferably 0.3 mass% or more, and most preferably 0.5 mass% or more.

The manganese oxide or the lithium-containing manganese oxide can be mixed with other positive electrode active materials such as graphite fluoride and iron disulfide. The percentage of the other positive electrode active materials is preferably 30 mass% or less of the entire positive electrode active materials because the capacity of the positive electrode decreases as the percentage of the other positive electrode active materials increases.

The positive electrode may be, e.g., a molded body obtained by molding a mixture (positive electrode mixture) containing a positive electrode active material, a conductive assistant, a binder and the like into pellets, or a laminate having a structure in which a layer (positive electrode mixture layer) made from the positive electrode mixture is formed on one side or both sides of a current collector.

For the conductive assistant of the positive electrode mixture, a carbon material is preferably used. Examples of the carbon material includes: graphites (graphite carbon materials) such as flake graphite; carbon blacks such as acetylene black, Ketjen black, channel black, furnace black, lampblack, and thermal black; and carbon fibers. These may be used individually or in combination of two or more.

Examples of the binder of the positive electrode mixture include fluororesins such as polyvinylidene fluoride (PVDF), polytetrafluoroethylene (PTFE), and polymer of hexafluoride propylene. These may be used individually or in combination of two or more.

When the positive electrode is a molded body of the positive electrode mixture, the thickness is preferably 0.15 to 4 mm. When the positive electrode is in a form having a positive electrode mixture layer and a current collector, the thickness of the positive electrode mixture layer (the thickness per one side of the current collector) is preferably 30 to 300 µm.

When the positive electrode is a molded body of the positive electrode mixture, the positive electrode can be produced, e.g., by mixing a positive electrode active material, a conductive assistant, a binder and the like to prepare a positive electrode mixture, and molding the positive electrode mixture into a predetermined shape by pressure molding.

When the positive electrode is in the form having a positive electrode mixture layer and a current collector, the positive electrode can be produced, e.g., by the following steps. First, a positive electrode active material, a conductive assistant, a binder and the like are dispersed in an organic solvent such as water or N-methyl-2-pyrrolidone (NMP) to prepare a positive electrode mixture-containing composition (e.g., slurry, paste) (the binder may be dissolved in the solvent). The positive electrode mixture-containing composition is then applied to a current collector and dried, followed by press treatment such as calendaring as needed to obtain the positive electrode.

The positive electrode mixture is preferably composed of 80 to 98 mass% of the positive electrode active material; 1.5 to 10 mass% of the conductive assistant; and 0.5 to 10 mass% of the binder.

When the current collector is used in the positive electrode, examples of the material for the current collector include stainless steels such as SUS 316, SUS 430 and SUS 444, and examples of its form include a plainly woven metal net, an expanded metal, a lath net, a punched metal, a metal foam, and a foil (plate). The thickness of the current collector is preferably, e.g., 0.05 to 0.2 mm. Moreover, it is desirable to apply a pasty conductive material such as carbon paste or silver paste to the surface of the current collector.

A lead body for electrical connection to another member in a battery can be attached to the positive electrode using an ordinary method.

### <Separator>

When a negative electrode having a current collector (or a negative electrode laminate) and a positive electrode having a current collector are used in the non-aqueous electrolyte primary battery of this embodiment, the battery can be used in the form of, for example: a laminate (laminated electrode body) in which the positive electrode and the negative electrode are laminated via a separator; a wound body (wound electrode body) in which the above-mentioned laminate is wound spirally; and a flat wound body (flat wound electrode body) in which the above-mentioned wound body is formed into a flat shape in cross section. When a positive electrode constituted by a molded body of the positive electrode mixture and a negative electrode not having a current collector (or a negative electrode laminate) are used, a separator may be interposed between the positive electrode and the negative electrode and accommodated in a flat battery case to be used.

The separator may be, e.g., a porous membrane made of a fibrous resin, such as a resin woven fabric or nonwoven fabric, or a microporous resin film. Examples of the material of the separator include polyolefins such as polyethylene (PE), polypropylene (PP), and ethylene-propylene copolymers; in addition, heat-resistant resins having a melting point or heat decomposition temperature of 200°C or higher when a still higher heat resistance is required according to the application of a battery.

Examples of the heat-resistant resins include polyester [e.g., aromatic polyester typified by wholly aromatic polyester, polybutylene terephthalate (PBT)], polyacetal, polyamide [e.g., aromatic polyamide typified by wholly aromatic polyamide (aramid), nylon], polyether (e.g., aromatic polyether typified by wholly aromatic polyether), polyketone (e.g., aromatic polyketone typified by wholly aromatic polyketone), polyimide, polyamide-imide (PAI), polyphenylene sulfide (PPS), polybenzimidazole (PBI), polyether ether ketone (PEEK), polyethersulfone (PES), poly(p-phenylene benzobisthiazole), poly(p-phenylene-2,6-benzobisoxazole), polyurethane, polymethylpentene, cellulose, polyvinyl alcohol (PVA), and fluororesins such as tetrafluoroethylene-perfluoroalkoxy ethylene copolymer (PFA).

The above examples of the material of the separator may be used individually or in combination of two or more. The porous membrane and the microporous resin film as the separator may have a single layer structure made of the material exemplified above, or, e.g., a laminated structure in which a plurality of porous membranes and microporous resin films composed of different materials are laminated.

When the separator is made of a highly hygroscopic material such as polyamide, cellulose, polyvinyl alcohol or the like, generally, the amount of moisture to be brought into a battery will be large, which may cause swelling of the battery. However, it is considered that, since a certain amount of moisture is required for a reaction of the compound having in its molecule the group represented by General Formula (1) above to form a coating on the surface of the negative electrode, it is possible to prevent characteristic deterioration of the battery during high temperature storage by the action of the compound, even in the case of using a separator made of a highly hygroscopic material.

The thickness of the separator is preferably 10 µm or more, and more preferably 15 µm or more, from the viewpoint of favorably preventing a short circuit. Meanwhile, the thickness of the separator is preferably 300 µm or less, more preferably 40 µm or less, and particularly preferably 30 µm or less, from the viewpoint of preventing an increase in the internal resistance and a decrease in the volume energy density while enhancing the load characteristics.

The separator has porosity of preferably 40 to 80%.

In the case of using a microporous resin film such as a polyolefin microporous film that is generally used in a non-aqueous electrolyte secondary battery, sufficient load characteristics can be obtained within a temperature range up to about 0°C. However, to configure a battery having excellent characteristics also at a low temperature of -20°C or lower, air permeability (Gurley value) of the separator needs to be low. Because of this, it is preferable to use a porous membrane made of a fibrous resin to improve the load characteristics at low temperature. The air permeability of the separator is preferably 50 sec/100 mL or less, and more preferably 20 sec/100 mL or less. Meanwhile, the air permeability is preferably 0.5 sec/100 mL or more, and more preferably 1 sec/100 mL or more to prevent an internal short circuit due to an excessively large maximum pore diameter.

The average pore diameter of the separator is preferably 0.1 µm or more to increase the permeability of lithium ions and improve the load characteristics of a battery. Meanwhile, the average pore diameter of the separator is preferably 1 µm or less, and more preferably 0.8 µm or less to prevent a minute short circuit due to dropped active material particles. The average pore diameter of the separator is determined based on the bubble point measurement specified by Japanese Industrial Standards (JIS) K 3832.

The average fiber diameter of fibers constituting the porous membrane is preferably 3 µm or less, and more preferably 1 µm or less. It is particularly preferred that the fibers are formed from nanofibers having an average fiber diameter of 0.8 µm or less. By constituting the porous membrane by fibers having the above-mentioned average fiber diameter, it is possible to easily adjust the average pore diameter of the separator within the above-mentioned value. However, excessively fine nanofibers may make the production of the separator difficult and make the adjustment of the average pore diameter of the separator within the above-mentioned value difficult, and increase the tortuosity of each hole of the separator and inhibit the movement of lithium ions. Therefore, the average fiber diameter of the nanofibers constituting the separator is preferably 50 nm or more, and more preferably 100 nm or more.

The average length and average diameter of the fibers are those which are measured from TEM images captured at an acceleration voltage of 100 kV or 200 kV by a transmission electron microscope (TEM, for example, "JEM series" produced by JEOL Ltd., "H-700H" produced by Hitachi, Ltd., etc.). TEM images of 100 samples are captured at a magnification of 20,000 to 40,000 in the case of observing an average fiber length and 200,000 to 400,000 in the case of observing the average diameter, and the length and diameter of each fiber are measured with a metal measure certified to be a first-grade by Japanese Industrial Standards (JIS). The measured values are averaged to obtain an average length and an average diameter.

Generally, in the case of forming a lithium alloy on the surface of a lithium layer inside a battery as a negative electrode, the surface of the negative electrode tends to pulverize due to the volume expansion at the time of alloying, and the active materials tend to drop off from the negative electrode by vibration or the like. Therefore, generally, if a porous membrane made of a fibrous resin is used as a separator, dropped fine powder passes through the holes of the separator and causes problems such as a short circuit.

On the other hand, in the non-aqueous electrolyte primary battery of this embodiment, the coating formed on the surface of the negative electrode is considered to prevent the surface of the negative electrode from pulverizing, thereby preventing the active materials from dropping off. Therefore, even when the porous membrane is used as the separator, it is possible to configure a non-aqueous electrolyte primary battery hardly causing a short circuit and having an excellent vibration resistance.

### <Form of battery>

The form of the non-aqueous electrolyte primary battery of this embodiment is not particularly limited, and various forms such as a flat shape (e.g., a coin shape, a button shape), a laminated shape, a tubular shape (e.g., a cylindrical shape, and a square shape (rectangular shape)) can be adopted. As an outer body (battery case) that accommodates a negative electrode, a positive electrode, a separator and a non-aqueous electrolyte inside, a combination of a metallic can (outer can) having an opening and a lid (sealing plate), a metallic laminated film, or the like, can be used.

Specifically, flat-shaped batteries and tubular-shaped batteries can be produced, for example, by sealing an outer can and a sealing plate by caulking with a gasket interposed therebetween, or sealing an outer can and a sealing plate by welding. A laminated battery can be produced, for example, by layering two metallic laminated films, or folding one metallic laminated film and adhering the periphery to each other to seal the film.

In the case of using an outer body prepared by caulking sealing, examples of the material of the gasket to be interposed between an outer can and a sealing plate include polyolefin-based resins such as polyethylene (PE) and polypropylene (PP), and mixtures and copolymers of these. In addition, in the case where a still higher heat resistance is required according to the application of a battery, examples of the material of the gasket include heat-resistance resins having a melting point or heat decomposition temperature of 200°C or higher such as polyphenylene ether (PEE), polysulfone (PSF), polyarylate (PAR), polyethersulfone (PES), polyphenylene sulfide (PPS), polyether ether ketone (PEEK), nylon, and fluororesins such as tetrafluoroethylene-perfluoroalkoxy ethylene copolymer (PFA). In order to more reliably prevent water from entering into the battery, a glass hermetic seal may be used at the sealing.

### Examples

Hereinafter, the present invention will be described in detail by way of examples. However, the present invention is not limited to the following examples.

### (Example 1)

### <Production of positive electrode>

A positive electrode mixture prepared by mixing a manganese dioxide (positive electrode active material), carbon black (conductive assistant), and PTFE (binder) at a mass ratio of 93 : 3 : 4 was molded to prepare a circular positive electrode (positive electrode mixture molded body) having a diameter of 16 mm and a thickness of 1.8 mm.

### <Production of negative electrode laminate>

An aluminum foil having a thickness of 0.01 mm was pressure bonded to one side of a lithium foil having a thickness of 0.6 mm, and a laminate thus obtained was punched into a circle having a diameter of 16 mm to prepare a negative electrode laminate.

### <Preparation of non-aqueous electrolyte>

LiBF₄ was dissolved at a concentration of 1 mol/L in a mixed solvent containing propylene carbonate (PC) and methylethyl carbonate (MEC) at a mass ratio of 50 : 50, and tris(trimethylsilyl) phosphate was further added thereto at a ratio of 2 mass% to prepare a non-aqueous electrolyte.

### <Assembly of battery>

A non-aqueous electrolyte primary battery having a diameter of 20 mm and a height of 3.2 mm was assembled into the structure illustrated in FIG. 1 using the above-mentioned positive electrode, negative electrode laminate, non-aqueous electrolyte, and a nonwoven fabric made of PPS (thickness: 170 µm, air permeability: 21 sec/100 mL) as a separator.

FIG. 1 is a cross-sectional view schematically illustrating a non-aqueous electrolyte primary battery of Example 1. In a non-aqueous electrolyte primary battery 1 of Example 1, a positive electrode 2 is accommodated inside an outer can 5 made of stainless steel, on which a negative electrode 3 is arranged via a separator 4. A surface of the negative electrode 3 on the lithium layer (lithium foil) side is pressured bonded to an inner surface of a sealing plate 6. A lithium-aluminum alloy is formed on a surface of the negative electrode 3 on the separator 4 side (not illustrated in FIG. 1). A non-aqueous electrolyte (not illustrated) is injected inside the non-aqueous electrolyte primary battery 1.

In the non-aqueous electrolyte primary battery 1, the outer can 5 serves as a positive electrode terminal, and the sealing plate 6 serves as a negative electrode terminal. The sealing plate 6 is fitted to an opening of the outer can 5 via an insulating gasket 7 made of PPS, an opening end of the outer can 5 is fastened inwardly, and the insulating gasket 7 comes into contact with the sealing plate 6, whereby the opening of the outer can 5 is sealed, and the inside of the battery has a sealing structure. In other words, the non-aqueous electrolyte primary battery 1 is formed from the outer can 5, the sealing plate 6, and the insulating gasket 7 interposed therebetween, and the sealed battery case accommodates the non-aqueous electrolyte and an electrode body in which the positive electrode 2, the separator 4, and the negative electrode 3 are layered.

### (Example 2)

A non-aqueous electrolyte primary battery of Example 2 was assembled in the same manner as in Example 1, except that the addition amount of tris(trimethylsilyl) phosphate in the non-aqueous electrolyte was 0.5 mass%.

### (Example 3)

A non-aqueous electrolyte primary battery of Example 3 was assembled in the same manner as in Example 1, except that the addition amount of tris(trimethylsilyl) phosphate in the non-aqueous electrolyte was 4 mass%.

### (Example 4)

A non-aqueous electrolyte primary battery of Example 4 was assembled in the same manner as in Example 1, except that the non-aqueous electrolyte was prepared by adding 1 mass% of 1,3-propenesultone together with tris(trimethylsilyl) phosphate.

### (Example 5)

A non-aqueous electrolyte primary battery of Example 5 was assembled in the same manner as in Example 1, except that the non-aqueous electrolyte was prepared by adding 2 mass% of tris(trimethylsilyl) borate instead of tris(trimethylsilyl) phosphate.

### (Example 6)

An aqueous solution in which 10 parts by mass of lithium hydroxide was dissolved was mixed with 400 parts by mass of an electrolytic manganese dioxide, and a composition thus obtained was dried, mixed uniformly, then heated at 450°C and left to cool down, and washed with water to obtain a lithium-containing manganese oxide having a Li content of 0.4 mass% and a structure in which β and γ types were combined.

A non-aqueous electrolyte primary battery of Example 6 was assembled in the same manner as in Example 1, except that the above-mentioned lithium-containing manganese oxide was used as an positive electrode active material.

### (Comparative Example 1)

A non-aqueous electrolyte primary battery of Comparative Example 1 was assembled in the same manner as in Example 1, except that tris(trimethylsilyl) phosphate was not added to the non-aqueous electrolyte.

### (Comparative Example 2)

A non-aqueous electrolyte primary battery of Comparative Example 2 was assembled in the same manner as in Example 1, except that the addition amount of tris(trimethylsilyl) phosphate in the non-aqueous electrolyte was 10 mass%.

### (Comparative Example 3)

A non-aqueous electrolyte primary battery of Comparative Example 3 was assembled in the same manner as in Example 1, except that the non-aqueous electrolyte was prepared by adding 2 mass% of lithium bis(oxalate)borate[LiB(C₂O₄)₂] instead of tris(trimethylsilyl)phosphate.

### <Evaluation of high-temperature storage characteristics of batteries in a non-discharged state>

High-temperature storage characteristics of the non-aqueous electrolyte primary batteries of Examples 1-6 and Comparative Examples 1-3 in a non-discharged state were evaluated under conditions below.

The first internal resistance and the open circuit voltage (OCV) of each of the batteries of the examples and comparative examples were measured in an environment of 20°C. Then, each battery was placed and maintained in a thermostat oven adjusted at 150°C, taken out after a lapse of 24 hours, and left to cool down to a room temperature. For each battery after cooling, an internal resistance after high temperature storage, an open circuit voltage (OCV), and a change in the thickness of the battery from the thickness before storage were measured in an environment of 20°C. The internal resistance of each battery was expressed as impedance at 1 kHz, which was measured in accordance with an AC impedance method. Moreover, a discharging resistor of 100 Ω was connected to each battery, and a voltage [closed circuit voltage (CCV)] of the battery 0.3 seconds after the start of discharging was measured to evaluate the discharging characteristics after high temperature storage. Table 1 shows the results.

**[Table 1]**

| | First time | | After high temperature storage | | | |
|---|---|---|---|---|---|---|
| | Internal resistance (mΩ) | OCV (V) | Change in thickness of battery (mm) | Internal resistance (mΩ) | OCV (V) | CCV (V) |
| Ex. 1 | 20 | 3.25 | 0.35 | 50 | 3.22 | 2.32 |
| Ex. 2 | 13 | 3.27 | 0.51 | 75 | 3.20 | 2.22 |
| Ex. 3 | 30 | 3.26 | 0.22 | 70 | 3.26 | 2.11 |
| Ex. 4 | 20 | 3.24 | 0.26 | 40 | 3.23 | 2.37 |
| Ex. 5 | 21 | 3.24 | 0.37 | 52 | 3.20 | 2.30 |
| Ex. 6 | 18 | 3.35 | 0.30 | 47 | 3.33 | 2.36 |
| Comp. Ex. 1 | 8.1 | 3.28 | > 1.0 | - | - | - |
| Comp. Ex. 2 | 70 | 3.23 | 0.02 | 400 | 3.21 | 0.05 |
| Comp. Ex. 3 | 9.8 | 3.26 | 0.54 | 130 | 3.30 | 1.80 |

| | | | | | | |
|---|---|---|---|---|---|---|
| *Ex.: Example, Comp. Ex.: Comparative Example | | | | | | |

As to the battery of Comparative Example 1, since the electrolyte did not contain the phosphoric acid compound or boric acid compound having in its molecule the group represented by General Formula (1), a large amount of gas was generated inside the battery during the storage at a high temperature of 150°C, and the battery swelled largely, which made it impossible to measure the characteristics of the battery after high temperature storage. As to the battery of Comparative Example 2, since the content of tris(trimethylsilyl) phosphate in the electrolyte was too large, the internal resistance of the battery increased excessively, which deteriorated the discharging characteristics after high temperature storage.

As to the battery of Comparative Example 3, the deterioration of the discharging characteristics after high temperature storage was reduced by addition of LiB(C₂O₄)₂, as compared with the batteries of Comparative Examples 1 and 2. The batteries of Examples of 1-6 of the present invention further prevented the deterioration of the characteristics, as compared with the battery of Comparative Example 3. It is evident that the non-aqueous electrolyte primary batteries of Examples of 1-6 are excellent in reliability.

### (Example 7)

LiBF₄ was dissolved at a concentration of 1 mol/L in a mixed solvent containing propylene carbonate (PC) and methylethyl carbonate (MEC) at a mass ratio of 50 : 50, and tris(trimethylsilyl) phosphate was added thereto at a ratio of 2 mass%, and lithium bis(oxalate) borate was further added thereto at a ratio of 0.5 mass% to prepare a non-aqueous electrolyte.

A non-aqueous electrolyte primary battery of Example 7 was assembled in the same manner as in Example 1, except for the use of the above-mentioned non-aqueous electrolyte.

### (Example 8)

A non-aqueous electrolyte primary battery of Example 8 was assembled in the same manner as in Example 7, except that the addition amount of lithium bis(oxalate) borate in the non-aqueous electrolyte was 1 mass%.

### (Example 9)

A non-aqueous electrolyte primary battery of Example 9 was assembled in the same manner as in Example 7, except that the addition amount of lithium bis(oxalate) borate in the non-aqueous electrolyte was 2 mass%.

### (Example 10)

A non-aqueous electrolyte primary battery of Example 10 was assembled in the same manner as in Example 7, except that the addition amount of lithium bis(oxalate) borate in the non-aqueous electrolyte was 3 mass%.

### <Evaluation of high-temperature storage characteristics of batteries in a 60%-discharged state>

High-temperature storage characteristics of the non-aqueous electrolyte primary batteries of Examples 1 and 7-10 in a 60%-discharged state were evaluated under conditions below.

First, a resistor of 15 kΩ was connected to each battery, and discharging was carried out until the depth of discharge with respect to the positive electrode capacity became 60%. Next, each battery was placed and maintained in a thermostat oven adjusted at 150°C, taken out after a lapse of 24 hours, and left to cool down to a room temperature. For each battery after cooling, an internal resistance after high temperature storage and a change in the thickness of the battery from the thickness before storage were measured in an environment of 20°C. The internal resistance of each battery was expressed as impedance at 1 kHz, which was measured in accordance with an AC impedance method. Table 2 shows the results.

**[Table 2]**

| | After high temperature storage | |
|---|---|---|
| | Internal resistance (mΩ) | Change in thickness of battery (mm) |
| Ex. 1 | 115 | 0.53 |
| Ex. 7 | 73 | 0.39 |
| Ex. 8 | 65 | 0.27 |
| Ex. 9 | 54 | 0.23 |
| Ex. 10 | 68 | 0.20 |

| | | |
|---|---|---|
| *Ex.: Example, Comp. Ex.: Comparative Example | | |

In Examples 7-10, the non-aqueous electrolytes contained lithium bis(oxalate) borate and the phosphoric acid compound having in its molecule the group represented by General Formula (1). By doing so, the batteries of Examples 7-10 exhibited greater high-temperature storage characteristics in a state where discharging had been progressed, than the battery of Example 1 not containing lithium bis(oxalate) borate.

### (Example 11)

LiClO₄ was dissolved at a concentration of 0.5 mol/L in a mixed solvent containing propylene carbonate (PC) and 1,2-dimethoxyethane (DME) at a volume ratio of 50 : 50, and tris(trimethylsilyl)phosphate and 1,3-propanesultone were further added thereto at a ratio of 1 mass% and at a ratio of 2 mass%, respectively, to prepare a non-aqueous electrolyte.

A non-aqueous electrolyte primary battery of Example 11 was assembled in the same manner as in Example 1, except for the use of the above-mentioned non-aqueous electrolyte.

### (Example 12)

A non-aqueous electrolyte primary battery of Example 12 was assembled in the same manner as in Example 11, except that the addition amount of tris(trimethylsilyl) phosphate in the non-aqueous electrolyte was 3 mass%.

### (Example 13)

A non-aqueous electrolyte primary battery of Example 13 was assembled in the same manner as in Example 11, except that the addition amount of tris(trimethylsilyl) phosphate in the non-aqueous electrolyte was 5 mass%.

### (Example 14)

A non-aqueous electrolyte primary battery of Example 14 was assembled in the same manner as in Example 11, except that the addition amount of tris(trimethylsilyl) phosphate in the non-aqueous electrolyte was 0.5 mass%.

### (Example 15)

A non-aqueous electrolyte primary battery of Example 15 was assembled in the same manner as in Example 11, except that the lithium-containing manganese oxide produced in Example 6 was used as a positive electrode active material.

### (Example 16)

A non-aqueous electrolyte primary battery of Example 16 was assembled in the same manner as in Example 11, except that a gasket made of polypropylene was used instead of the gasket made of PPS.

### (Comparative Example 4)

A non-aqueous electrolyte primary battery of Comparative Example 4 was assembled in the same manner as in Example 11, except that tris(trimethylsilyl) phosphate was not added to the non-aqueous electrolyte.

High-temperature storage characteristics of the non-aqueous electrolyte primary batteries of Examples 11-16 and Comparative Example 4 in a non-discharged state were evaluated under the same conditions as above. Table 3 shows the results.

**[Table 3]**

| | First time | | After high temperature storage | | |
|---|---|---|---|---|---|
| | Internal resistance (mΩ) | OCV (V) | Change in thickness of battery (mm) | Internal resistance (mΩ) | OCV (V) |
| Ex. 11 | 8 | 3.23 | 0.51 | 54 | 3.28 |
| Ex. 12 | 9 | 3.25 | 0.39 | 37 | 3.30 |
| Ex. 13 | 10 | 3.25 | 0.30 | 19 | 3.32 |
| Ex. 14 | 8 | 3.22 | 0.52 | 53 | 3.27 |
| Ex. 15 | 7 | 3.31 | 0.26 | 49 | 3.35 |
| Ex. 16 | 8 | 3.23 | > 1.0 | - | - |
| Comp. Ex. 4 | 8 | 3.24 | 0.70 | 72 | 3.28 |

| | | | | | |
|---|---|---|---|---|---|
| *Ex.: Example, Comp. Ex.: Comparative Example | | | | | |

As shown in Table 3, the non-aqueous electrolyte primary batteries of Examples 11-15 using the non-aqueous electrolytes containing tris(trimethylsilyl) phosphate as an additive prevented the swelling of batteries and the increase of the internal resistance, as compared with the battery of Comparative Example 4 using the electrolyte not containing the above-mentioned additive.

As to the battery of Example 16 using the gasket made of resin (polypropylene) having a melting point of less than 200°C, the battery swelled largely due to the deterioration of the sealing properties, which made it impossible to evaluate the characteristics of the battery after high temperature storage. Although the battery of Example 16 exhibited excellent characteristics when used in a temperature environment up to about 100°C, it is preferable to use a gasket made of a heat-resistant resin having a melting point or heat decomposition temperature of 200°C or higher for the application at temperatures higher than that.

### (Example 17)

A non-aqueous electrolyte primary battery of Example 17 was produced in the same manner as in Example 12, except that a laminate in which a nonwoven fabric (air permeability: 15 sec/100 mL) made of PPS having a thickness of 150 µm and a microporous film (porosity: 45%, air permeability: 290 sec/100 mL) made of polypropylene having a thickness of 20 µm were layered was used as a separator (the total thickness of the separator: 170 µm).

Each of the batteries of Examples 12, 17 and Comparative Example 4 was placed and maintained in a thermostat oven adjusted at 150°C, taken out after a lapse of 24 hours, and left to cool down to a room temperature. Each battery after cooling was left to stand in an environment of -10°C, and a discharging resistor of 100 Ω was connected to each battery after the temperature of the battery dropped. A voltage [closed circuit voltage (CCV)] of the battery five seconds after the start of discharging was measured to evaluate the load characteristics at low temperature after high temperature storage. Table 4 shows the results.

**[Table 4]**

| | Load characteristics at low temperature after high temperature storage [CCV (V)] |
|---|---|
| Ex. 12 | 2.52 |
| Ex. 17 | 1.70 |
| Comp. Ex. 4 | < 1.0 |

| | |
|---|---|
| *Ex.: Example, Comp. Ex.: Comparative Example | |

As shown in Table 4, the batteries of Examples 12 and 17 using the non-aqueous electrolyte containing tris(trimethylsilyl) phosphate as an additive exhibited greater load characteristics at low temperature after high temperature storage than the battery of Comparative Example 4 using the non-aqueous electrolyte not containing the above-mentioned additive.

Although the total thickness (170 µm) of the separator of the battery of Example 17 was the same as the thickness of the separator of the battery of Example 12, the load characteristics at low temperature after storage of the battery of Example 17 was lower than that of the battery of Example 12. The reasons for this are considered as follows. The microporous film made of polypropylene used in the battery of Example 17 had higher air permeability than the nonwoven fabric used in the battery of Example 12; besides, the storage in a temperature environment of 150°C, which is close to the melting point of polypropylene (in the vicinity of 170°C), induced closing of holes of the separator and degraded ion permeability.

Therefore, in order to improve the load characteristics at low temperature, it is preferable to use a separator with low air permeability. For the application to be used at high temperature, it is preferable to use a separator made of a heat-resistant resin having a melting point or heat decomposition temperature of 200°C or higher.

The present invention may be embodied in other forms without departing from the spirit or essential characteristics thereof. The embodiments disclosed in this application are to be considered in all respects as illustrative and not limiting. The scope of the present invention is indicated by the appended claims rather than by the foregoing description, and all changes which come within the meaning and range of equivalency of the claims are intended to be embraced therein.

### Industrial Applicability

Since the non-aqueous electrolyte primary batteries of the present invention have favorable discharging characteristics and excellent reliability in high temperature environments, they can be used suitably especially in applications to be exposed to high temperature, including automobile applications such as a power source application of pressure sensors inside tires, by taking advantage of such characteristics. In addition, the non-aqueous electrolyte primary batteries of the present invention can be used in the same various applications as the applications where conventionally known non-aqueous electrolyte primary batteries have been adopted.

### Description of Reference Numerals

- 1: Non-aqueous electrolyte primary battery
- 2: Positive electrode
- 3: Negative electrode
- 4: Separator
- 5: Outer can
- 6: Sealing plate
- 7: Insulating gasket

## Claims

1. A non-aqueous electrolyte primary battery, comprising:
a negative electrode;
a positive electrode;
a separator; and
a non-aqueous electrolyte,
wherein the negative electrode contains metallic lithium or a lithium alloy,
the positive electrode contains a manganese oxide or a lithium-containing manganese oxide with a lithium content of 3.5% by mass or less,
the non-aqueous electrolyte contains a phosphoric acid compound or a boric acid compound having in its molecule a group represented by General Formula (1) below, and
the content of the phosphoric acid compound or the boric acid compound in the non-aqueous electrolyte is 8% by mass or less: 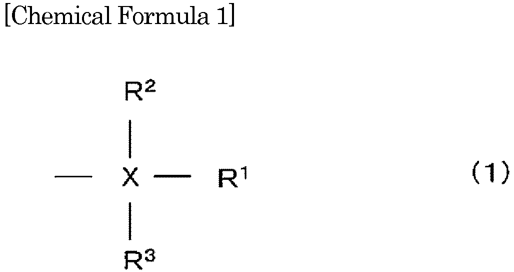
where X is Si, Ge or Sn; R¹, R² and R³ independently represent an alkyl group having 1 to 10 carbon atoms, an alkenyl group having 2 to 10 carbon atoms, or an aryl group having 6 to 10 carbon atoms; and some or all of hydrogen atoms may be substituted with a fluorine atom.

2. The non-aqueous electrolyte primary battery according to claim 1, wherein the content of the phosphoric acid compound or the boric acid compound in the non-aqueous electrolyte is 0.1% by mass or more.

3. The non-aqueous electrolyte primary battery according to claim 1 or 2, wherein the group represented by General Formula (1) is a trimethylsilyl group.

4. The non-aqueous electrolyte primary battery according to any one of claims 1 to 3, wherein the non-aqueous electrolyte further contains a sultone compound.

5. The non-aqueous electrolyte primary battery according to claim 4, wherein the content of the sultone compound in the non-aqueous electrolyte is 0.1 to 5% by mass.

6. The non-aqueous electrolyte primary battery according to any one of claims 1 to 5, wherein the non-aqueous electrolyte further contains an organic lithium borate.

7. The non-aqueous electrolyte primary battery according to claim 6, wherein the content of the organic lithium borate in the non-aqueous electrolyte is 0.1 to 5% by mass.

8. The non-aqueous electrolyte primary battery according to any one of claims 1 to 7,
wherein the non-aqueous electrolyte contains an organic solvent, and
the organic solvent contains propylene carbonate in an amount of 10% by volume or more in a total of solvent.

9. The non-aqueous electrolyte primary battery according to any one of claims 1 to 8, wherein the non-aqueous electrolyte contains at least one lithium salt selected from the group consisting of LiClO₄, LiBF₄, LiCF₃SO₃, Li₂C₂F₄(SO₃)₂, LiN(FSO₂)₂, LiN(CF₃SO₂)₂, LiC(CF₃SO₂)₃, and LiCF₃CO₂.

10. A method for manufacturing the non-aqueous electrolyte primary battery according to any one of claims 1 to 9, comprising:
adding a phosphoric acid compound or a boric acid compound having in its molecule a group represented by General Formula (1) below to an organic solvent to produce a non-aqueous electrolyte: 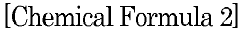 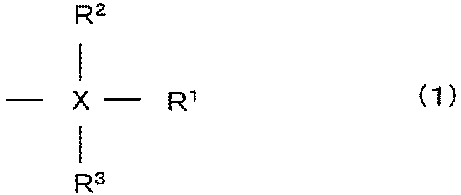
where X is Si, Ge or Sn; R¹, R² and R³ independently represent an alkyl group having 1 to 10 carbon atoms, an alkenyl group having 2 to 10 carbon atoms, or an aryl group having 6 to 10 carbon atoms; and some or all of hydrogen atoms may be substituted with a fluorine atom.
